Europäisches Patentamt

European Patent Office

Office européen des brevets

(11) Publication number: **0 091 497**
**B1**

(12) **EUROPEAN PATENT SPECIFICATION**

(45) Date of publication of patent specification: **24.09.86**

(21) Application number: **82103035.0**

(22) Date of filing: **08.04.82**

(51) Int. Cl.⁴: **A 23 B 4/08,** A 23 B 4/10,
A 23 L 1/325

(54) Production of frozen fish.

(43) Date of publication of application:
**19.10.83 Bulletin 83/42**

(45) Publication of the grant of the patent:
**24.09.86 Bulletin 86/39**

(84) Designated Contracting States:
**BE CH FR GB LI NL SE**

(56) References cited:
**GB-A-2 029 687**
**US-A-2 724 651**
**US-A-3 656 969**

**RESEARCH DISCLOSURES, no. 182, June 1979,
page 322, no. 18238, Havant Hants., (GB);
"Saturation of crumb coatings with oil without
frying"**

(73) Proprietor: **FRISCO-FINDUS AG**
**CH-9400 Rorschach (CH)**

(72) Inventor: **Hansson, Nils-Erik**
**Kaprifolgatan 19**
**S-267 00 Bjuv (SE)**

The file contains technical information
submitted after the application was filed and
not included in this specification

Courier Press, Leamington Spa, England.

# Description

The present invention relates to the production of coated frozen fish products for subsequent oven preparation.

Coated frozen fish products, suitable for preparation by oven cooking and which when cooked have a crisp, browned outer surface, require a product quality especially designed for such preparation. Such coated fish portions and fillets are normally pretreated by deep fat frying at about 200°C before freezing, the main reason being to obtain a fat coating which makes oven heating possible. If the fish were not pretreated by deep fat frying an inconveniently long oven cooking time would be necessary and the final cooked product would have a coating which is mushy with an objectionable taste. However pretreatment by deep fat frying is not only expensive but during the frying there is a substantial loss of moisture which reduces the yield.

GB—A—2029687 discloses a process for preparing a coated frozen fish portion suitable for preparation by oven cooking which comprises initially applying a conventional starch/flour water batter, then an edible liquid oil containing a moisture-absorbing substance and finally a particulate substance e.g. breadcrumbs. However, the only method described for applying the oil is spraying wherein the oil uptake is normally from 1 to 2 % by weight based on the weight of the product. We have found that when such products are heated in a convection oven they have undesirable burnt surfaces.

We have developed a process for preparing coated frozen fish products suitable for oven cooking wherein the fish piece is dipped in liquid fat to obtain a fat uptake of at least 7 % by weight based on the weight of the final fish product which process does not involve a pretreatment by deep fat frying. Our process is cheaper, easier to control and gives a higher yield than a process which involves a pretreatment by deep fat frying at a high temperature, and when the product is heated in a convection oven for preparation it does not have undesirable burnt surfaces as does the product of GB—A—2029687.

According to the present invention there is provided a process for preparing a coated frozen fish product wherein a frozen fish piece is initially battered, then breaded a first time, thereafter dipped in an edible fat in liquid form having a melting point of less than 50°C so that the uptake of fat is at least 7 % by weight based on the weight of the final fish product, and finally breaded a second time before being frozen.

The frozen fish piece may be a sawed portion or a single frozen fillet and before being initially battered it may be predusted to cover the naked surface with water-absorbing ingredients such as starches, egg-white powder or potato powder to give a better contact between the fish and the coating.

The fish piece may be battered by using standard battering equipment. The amount of batter applied to the fish piece may conveniently be from 5 % to 9 % by weight and preferably from 6 % to 8 % by weight based on the weight of the final fish product. Preferably a pumpable flour-based batter is used comprising, for example, wheat flour, wheat starch, water and a small amount of skimmed milk or egg-white powder. Any excess batter may be blown off by air streams.

After being battered the fish is subjected to a first breading treatment conveniently using standard breading equipment. The amount of breading material applied to the fish piece by the first breading treatment is conveniently from 5 % to 9 % by weight and preferably from 6 % to 8 % by weight based on the weight of the final fish product. Conveniently the breading material consists of breadcrumbs, desirably of a dark colour, having a particle size of from 0.1 to 2.0 mm and preferably from 0.25 to 1.0 mm. Any excess breading material may be blown off by air streams.

The edible fat may be a bland edible vegetable oil or a blend of vegetable oil with an animal or vegetable fat and is conveniently a margarine which may be liquid or solid at ambient temperature. The amount of edible fat applied to the fish piece may suitably be from 7 % to 15 %, preferably from 8 % to 14 % and especially from 9 % to 12 % by weight based on the weight of the final fish product. The fish piece is coated with the liquid fat by dipping the fish piece into the liquid fat. If the fat is liquid at ambient temperature, although the coating operation may be carried out with the fat at an elevated temperature, for example up to 40°, it is more conveniently carried out with the fat at ambient temperature, preferably from 20°C to 25°C. If the fat is solid at ambient temperature it must be melted and the coating operation is conveniently carried out with the melted fat at a temperature of from 55°C to 75°C and preferably from 60°C to 70°C. Any excess fat may be blown off by air streams. The coating operation may suitably be carried out using standard battering equipment. The liquid fat is advantageously circulated by means of a pump from a storage vessel to a position where it is poured onto the fish pieces the excess being caught in a trough from which the liquid fat returns to the storage vessel. When the fish piece is coated by dipping into the liquid fat it is conveniently dipped in the fat in the trough for example by transporting it through the fat in the trough on a conveyor belt. Any breading material in the circulating oil may be filtered by a simple metal screen immediately before the pump infeed. Since the circulating liquid fat is cooled by the frozen fish pieces it is necessary to heat the fat, preferably with a thermostatically controlled heating unit to ensure a substantially stable fat temperature. When using a fat which is liquid at ambient temperature this may conveniently be done either by an electric heating coil in the vessel containing the fat or by a steam kettle beside the vessel which is included in the liquid fat circulation by connections to the pump. When using a fat which is solid at ambient temperature both the melting of the fat and the heating to maintain a stable temperature is preferably performed by a separate fat melting unit.

The fish piece is then breaded for a second time conveniently using standard breading equipment to apply a thin layer of breading material onto the fat layer. The amount of breading material applied to the fish piece in the second breading treatment is conveniently from 2.5 % to 7.5 % by weight and preferably from 4 to 6 % by weight based on the weight of the final fish product. Conveniently, the breading material, as in the first breading treatment, consists of breadcrumbs, desirably of a dark colour, having a particle size of from 0.1 to 2.0 mm and preferably from 0.25 to 1.0 mm. The second layer is applied to the fat layer in order to reduce stickiness during handling and to improve the appearance. Any excess breading material may be blown off by air streams.

The fish pieces are conveniently transported to the successive stages of the process on conveyor belts.

The amounts of the different coatings may be controlled by either the belt speed, the viscosity of the batter, the temperature of the oil or by an air stream for blowing off excess material after each step in the operation. However, for practical purposes the amounts of the different coatings are controlled by the viscosity of the batter or the use of air streams for blowing off excess material.

The coated fish products may afterwards be frozen and packaged. In their preparation for eating, the products are heated in a convection oven usually at a temperature of from 175°C to 200°C for about 30 minutes to obtain an internal temperature above 60°C.

The process of the present invention is especially valuable for preparing coated frozen fish products to be used in the catering industry.

The following Examples further illustrate the present invention.

Example 1
A fish fillet is transported on a conveyor belt to a standard battering unit where it is coated with a batter consisting of 22 % wheat flour, 4.5 % salt, 1 % skim milk powder, 21.5 % wheat starch, 1 % spices and 50 % water. Excess coating is blown off by an air stream so that the amount of coating is 8 % by weight based on the weight of the final fish product. The fish fillet is then transported to a standard breading unit where it is coated with dark coloured breadcrumbs having a particle size in the range of 0.25 to 1.0 mm diameter. Excess breadcrumbs are blown off by an air stream so that the amount of breadcrumbs applied is 8 % by weight based on the weight of the final fish product. The fish is next transported to another standard battering unit containing Melba Frite 100 liquid margarine (sold by Margarinbolaget, Sweden) which circulates through the unit and is maintained at 25°C by an electric heating coil in the unit. The fish fillet passes through the liquid margarine and afterwards any excess is blown off by an air stream so that the amount of margarine coated on the fish is 9 % by weight based on the weight of the final product. Finally the fish is transported to another breading unit where it is coated a second time with dark coloured breadcrumbs having a particle size in the range of 0.25 to 1.0 mm diameter. After being coated, excess breadcrumbs are blown off by air streams above and below the fish product so that the amount of breadcrumbs applied by the second coating is 5 % by weight based on the weight of the final product. Any excess oil may also be blown off by these airstreams. The coated fish product is afterwards frozen and packaged.

Example 2
A similar procedure to that described in Example 1 was followed but in which the liquid margarine was heated to 40°C and maintained at this temperature instead of 25°C giving an uptake of 7 % by weight of margarine based on the weight of final fish product.

Example 3
A similar procedure to that described in Example 1 was followed but using Norma 100, solid fat margarine (sold by Margarinbolaget, Sweden) which was melted in a separate melting unit which also heated the circulating margarine to a constant temperature of 45°C. The uptake of the margarine was 9.3 % by weight based on the weight of the final product.

Example 4
A similar procedure to that described in Example 3 was followed but in which the melted margarine was heated to 70°C and maintained at this temperature instead of 45°C, giving an uptake of 6.7 % by weight of margarine based on the weight of the final fish product.

**Claims**

1. A process for preparing a coated frozen fish product characterised in that a frozen fish piece is initially battered, then breaded a first time, thereafter dipped in an edible fat in liquid form having a melting point of less than 50°C so that the fat uptake is at least 7 % by weight based on the weight of the final fish product, and finally breaded a second time before freezing.

2. A process according to claim 1 characterised in that the amount of batter applied to the fish piece is from 5 % to 9 % by weight based on the weight of the final fish product.

3. A process according to claim 1 characterised in that the breading material has a particle size in the range of from 0.25 to 1.0 mm.

4. A process according to claim 1 characterised in that the amount of breading material applied to the fish piece by the first breading treatment is from 5 % to 9 % by weight based on the weight of final fish product.

5. A process according to claim 1 characterised in that the edible fat is a margarine which is liquid or solid at ambient temperature.

6. A process according to claim 1 characterised in that the amount of edible fat applied to the fish piece is from 8 % to 14 % by weight based on the weight of the final fish product.

7. A process according to claim 1 characterised in that the amount of edible fat applied to the fish piece is from 9 % to 12 % by weight based on the weight of the final fish product.

8. A process according to claim 1 characterised in that the edible fat is a margarine which is liquid at ambient temperature and is applied to the fish pieces at a temperature from 20°C to 25°C.

9. A process according to claim 1 characterised in that the edible fat is a margarine which is solid at ambient temperature and is applied to the fish pieces at a temperature from 60° to 70°C.

10. A process according to claim 1 characterised in that the amount of breading material applied to the fish piece by the second breading treatment is from 2.5 % to 7.5 % by weight based on the weight of the final fish product.

**Patentansprüche**

1. Verfahren zur Herstellung eines überzogenen Gefrierfischprodukts, dadurch gekennzeichnet, daß ein Stück Gefrierfisch zuerst mit Teig überzogen wird, dann eine erste Brotbrösel-Panierung erhält, danach in ein flüssig vorliegendes eßbares Fett mit einem Schmelzpunkt von weniger als 50°C eingetaucht wird, so daß die Fettaufnahme wenigstens 7 Gew.-%, bezogen auf das Gewicht des fertigen Fischerzeugnisses, beträgt und abschließend vor dem Gefrieren eine zweite Brotbrösel-Panierung erhält.

2. Verfahren nach Anspruch 1, dadurch gekennzeichnet, daß die auf das Fischstück aufgebrachte Teigmenge von 5 bis 9 Gew.-%, bezogen auf das Gewicht des fertigen Fischerzeugnisses, beträgt.

3. Verfahren nach Anspruch 1, dadurch gekennzeichnet, daß das Material für die Brotbrösel-Panierung eine Teilchengröße im Bereich von 0,25 bis 1,0 mm aufweist.

4. Verfahren nach Anspruch 1, dadurch gekennzeichnet, daß die Menge des Materials für die Brotbrösel-Panierung, die bei der ersten Panierbehandlung auf das Fischstück aufgebracht wird, von 5 bis 9 Gew.-%, bezogen auf das Gewicht des fertigen Fischerzeugnisses, beträgt.

5. Verfahren nach Anspruch 1, dadurch gekennzeichnet, daß das eßbare Fett eine Margarine ist, die bei Umgebungstemperatur flüssig oder fest ist.

6. Verfahren nach Anspruch 1, dadurch gekennzeichnet, daß die Menge des eßbaren Fetts, das auf das Fischstück aufgebracht wird, von 8 bis 14 Gew.-%, bezogen auf das Gewicht des fertigen Fischerzeugnisses, beträgt.

7. Verfahren nach Anspruch 1, dadurch gekennzeichnet, daß die Menge des eßbaren Fetts, das auf das Fischstück aufgebracht wird, von 9 bis 12 Gew.-%, bezogen auf das Gewicht des fertigen Fischerzeugnisses, beträgt.

8. Verfahren nach Anspruch 1, dadurch gekennzeichnet, daß das eßbare Fett eine Margarine ist, die bei Umgebungstemperatur flüssig ist und die auf die Fischstücke bie einer Temperatur von 20 bis 25°C aufgebracht wird.

9. Verfahren nach Anspruch 1, dadurch gekennzeichnet, daß das eßbare Fett eine Margarine ist, die bei Umgebungstemperatur fest ist und die auf die Fischstücke bei einer Temperatur von 60 bis 70°C aufgebracht wird.

10. Verfahren nach Anspruch 1, dadurch gekennzeichnet, daß die Menge des Materials für die Brotbrösel-Panierung, das auf das Fischstück durch die zweite Panierbehandlung aufgebracht wird, von 2,5 bis 7,5 Gew.-%, bezogen auf das Gewicht des fertigen Fischerzeugnisses, beträgt.

**Revendications**

1. Procédé de préparation d'un produit de poisson congelé enrobé, caractérisé en ce qu'un morceau de poisson congelé est initialement recouvert de pâte, puis pané une première fois, ensuite plongé dans une graisse comestible sous forme liquide ayant un point de fusion de moins de 50°C afin que l'apport de graisse soit d'au moins 7% en poids sur la base du poids du produit de poisson final, et finalement pané une seconde fois avant congélation.

2. Procédé selon la revendication 1, caractérisé en ce que la quantité de pâte appliquée sur le morceau de poisson est de 5% à 9% en poids sur la base du produit de poisson final.

3. Procédé selon la revendication 1, caractérisé en ce que la panure présente une dimension de particules dans la plage de 0,25 à 1,0 mm.

4. Procédé selon la revendication 1, caractérisé en ce que la quantité de panure appliquée sur le morceau de poisson par le premier traitement de panage est de 5% à 9% en poids sur la base du poids du produit de poisson final.

5. Procédé selon la revendication 1, caractérisé en ce que la graisse comestible est une margarine qui est liquide ou solide à la température ambiante.

6. Procédé selon la revendication 1, caractérisé en ce que la quantité de graisse comestible appliquée sur le morceau de poisson est de 8% à 14% en poids sur la base du poids du produit de poisson final.

7. Procédé selon la revendication 1, caractérisé en ce que la quantité de graisse comestible appliquée au morceau de poisson est de 9% à 12% en poids sur la base du poids du produit de poisson final.

8. Procédé selon la revendication 1, caractérisé en ce que la graisse comestible est une margarine qui est liquide à la température ambiante et qui est appliquée sur les morceaux de poisson à une température de 20°C à 25°C.

9. Procédé selon la revendication 1, caractérisé en ce que la graisse comestible est une margarine qui est solide à la température ambiante et qui est appliquée sur les morceaux de poisson à une température de 60°C à 70°C.

10. Procédé selon la revendication 1, caractérisé en ce que la quantité de panure appliquée sur le morceau de poisson dans le second traitement de panage est de 2,5% à 7,5% en poids sur la base du poids du produit de poisson final.